# EUROPEAN PATENT APPLICATION

(11) **EP 3 920 151 A1**
(43) Date of publication of application: **08.12.2021**
(21) Application number: 20178239.8
(22) Date of filing: 04.06.2020
(51) Int. Cl.: G07C 5/08, G01M 13/04, G01H 1/00

(54) **DATA COLLECTION TRIGGERING DEVICE**

(71) Applicant: Hitachi, Ltd., Tokyo 100-8280 (JP)
(72) Inventor: ELLIS, Robert, London, EC2Y (GB); KATO, Tetsuji, London, EC2Y (GB); YAMASHITA, Tomoaki, London, EC2Y (GB)
(74) Representative: MERH-IP Matias Erny Reichl Hoffmann Patentanwälte PartG mbB

(57) **Abstract**

A data recording triggering device 1 for a system that has one or more sensors 109 comprising: a data input unit 2 configured to receive measurement data determined by the one or more sensors 109 as input data; a data processing unit 3 configured to process the input data received by the data input unit 2; a data output unit 4 configured to output a data recording signal by which recording of the measurement data is either started or terminated.

## Description

The present disclosure relates to a triggering device for data recording of a condition based maintenance system for systems, such as electrically powered vehicles including trains or electric cars which may use a machine learning algorithm to determine motor characteristics and steady state operation allowing data sampling to be triggered in continuous operational conditions, including any speed, loading condition and geographical location.

### Background

Data gathering equipment that enables condition based maintenance (CBM) of various systems, e.g., in a rail vehicle are hindered by several factors: excessive data collected results in high data transfer and storage cost, dynamic operation of railway vehicle systems in numerous operational situations require complex analytics and human expert resource to understand the condition. Cost benefits of CBM are therefore limited by data infrastructure cost and analysis expert requirement making a shift to advanced maintenance solutions challenging.

The United States Patent No. US 10,304,139 B2 describes a system and a method for determining a vehicle insurance premium for a period of time based in part on collected vehicle operation data, mobile device sensors, data collection software and a rating engine that determines insurance premium for the operated vehicle.

The United States Patent No. US 9,828,012 B2 describes a condition monitoring system for bearing units for vehicles, including a condition monitoring unit which measures bearing unit parameters, a control unit to receive parameter signals and a positioning system to detect geographic location of the unit and to activate and deactivate depending on the location.

Important factors for overcoming hindrances to the use of CBM are connected to the triggering of data recording. The triggering systems of the above discussed prior arts require rather high data rates and need improvement with regard to sample data at a wide range of operation of a monitored system.

For example, known technical applications often use no triggering and data is measured and it is sampled constantly, often at high frequency, e.g., 50 kHz. This approach is not applicable for effective data sampling for use with condition-based maintenance systems, e.g. for rotating machinery (e.g., motors, bearings, gearboxes).

Other known technical applications do use triggering mechanisms, however, relying on predetermination of discreet operational parameters, such as geographic location, vehicle direction, speed or a predefined/fixed electrical current threshold. In other words, predefined static thresholds are simply used as a trigger to start/stop data recording. These techniques are limited to the predetermined fixed operational parameters hindering a wide range use of condition based maintenance.

### Summary

It is a technical object of the present disclosure to provide technical options which improve the triggering of data recording in a sensor-monitored electrical or electromechanical system; enabling a wide use of condition based monitoring. In particular, there is proposed a device according to claim 1 that is a data recording triggering device. Further exemplarily, there are proposed a method and a computer program product according to the appended claims, whereby dependent claims relate to further preferred exemplary aspects.

Exemplary aspects may be provided as follows: According to some aspects and examples, there may be provided a data collection/recording triggering device for a monitored system, wherein it is a preferred aspect that the system is an electrical or an electromechanical system - not excluding micro electro-mechanical systems or the like. Said monitored system (briefly: system) may include one or more sensors used for monitoring one or more parameters of a unit of the system, such as a rotating machine. The data recording triggering device (briefly: said device) may comprise a data input unit configured to receive measurement data determined (which may include detected, measured, etc. by a sensor) by the one or sensors as an input data (which may also be considered or named as "raw data" or "input raw data") as well as a data output unit configured to output a data recording signal by which collection of measurement data is either started or terminated.

Preferably, the data output unit outputs the data recording signal to an entity of the system, which may be preferably a software unit installed in a memory and/or a hardware unit, such as a controller, a computer, a processor or the like.

The terms "collecting or recording of measurement data" or the "to collect/to record" shall be construed to entail all kind of options for saving data measured/sampled by a sensor on a longer time-scale or even permanently and/or using/processing said data for other purposes than the processing of the data processing unit described below. In other words, small fractions of the measurement data of the sensor(s) may be temporarily stored for the use of the data processing unit described below, especially for comparison reasons; e.g. a sensor memory or any kind of memory connected to the sensor may be provided with small storage space for short samples of the measurement data. If, e.g., the measurement data is processed by the data processing unit repeatedly, measurement data of a limited number of previous processing rounds/loops may be temporarily stored. Otherwise, the triggering signal for data recording initiates the recording/collection of larger amounts of data which form the basis for the condition based maintenance (CBM). In even other words, the recording of measurement data in the following context shall mean that data is stored that was measured by the sensors of the monitored system and which enables (post-)analysis of the monitored system, i.e. condition based maintenance and/or condition based monitoring/analysis. The recording must not be identical with the small amounts of data which is used for determining the data recording triggering signal described below.

For example, the recording of measurement data may include that the data measured by the sensor(s) is saved to a memory or transmitted (preferably wireless) to a memory for analysis of the data in view of possible maintenance requirements or prediction of errors/failures/maintenance need. The memory may be located remotely to the monitored system.

The data recording triggering device further may comprise a data processing unit configured to process the input data received by the data input unit. It is noted that the input and output unit(s) may be configured as software modules/objects, especially in case the data recording triggering device is a software product itself, or as hardware unit(s). Moreover, it is also possible that a dedicated hardware unit includes software module as input and output units. The data processing unit may be completely replaced by a later described model unit or the model unit may be completely replaced by the data processing unit.

The data processing unit may include a model unit and the model unit may preferably have further sub-units (or the data processing unit if the model unit is not used). Further, the sub-units may also be included in a single sub-unit or even replaced by the model unit itself, i.e. no sub-units may be provided. As described, if the model unit includes more than one sub-unit, preferably a first sub-unit is provided which may be configured to store a non-physical representation of the system. The non-physical representation shall be preferably understood as a software implementation and very preferably reproducing an algorithm, an Al module, a mathematical model or a numerical model, or the like. For example, if the first sub-unit shall represent an electrical circuit, a microelectromechanical system (MEMS), or any other part of a physical component of the system, the non-physical representation would encompass a software unit enabled to receive input values/data and to output values/data which the "real" system or part thereof would return in response to the input value/data as well or at least it may output a value/data which is close to the "real" system's output.

Further, a second sub-unit may be provided and the first sub-unit may be configured to process the input data such as to determine one or more values of one or more predetermined parameters and to output said values to the second sub-unit of the model unit. The second sub-unit may be configured to compare said values with previously determined, e.g., temporarily stored values of the predetermined parameters, and to generate the data recording signal for starting data collection if a comparison of said values with the previously determined values indicates that the values (of the predetermined parameters) are constant, i.e. do not change or do not vary largely over time. Another term may be used for constant which is "steady-state".

The predefined parameters may relate to expected output values, e.g., in a simple example for understanding the above, if the expected input is electrical current, the expected output may be electrical voltage so that the predefined parameter would be electrical voltage in this simple example.

Additionally or alternatively, the second sub-unit may be configured to compare values (determined by the first sub-unit) of one or more parameters with measurement data of the same parameters. The parameter(s) may, e.g., be one or more of an amplitude, a frequency, a current, or the like. Further, the second sub-unit may be additionally or alternatively configured to generate the data recording signal for starting the data recording if the comparison of said (determined) values with previously determined values (previous with regard to time or a processing loop) indicates that the values of the predetermined parameters are constant, and/or if the comparison of said values with the measurement data of the predetermined parameters indicates that a difference between the measurement data and the values output by the first sub-unit is within a predefined range.

Further, additionally or alternatively, the second sub-unit may be configured to compare (measured) values of one or more parameters included in the measurement data with (measured) values included in the measurement data of the same parameters for different times or processing loops. The parameter(s) may, e.g., be one or more of an amplitude, a frequency, a current, or the like. Further, the second sub-unit may be additionally or alternatively configured to generate the data recording signal for starting the data recording if the comparison of said (measured) values with previously (measured) values (previous with regard to time or a processing loop) indicates that the values of the measurement date are constant, and/or if a comparison of the determined values with the measurement data of the predetermined parameters indicates that a difference between the measurement data and the values output by the first sub-unit is within a predefined range.

A preferred option included in the above described options/alternatives is as follows: If two different predetermined parameters are measured, e.g. frequency and amplitude, it may be possible that the measured frequency values (included in the measurement data of the input data) are compared with each other over time, e.g. the frequency at time t with the frequency at time t+1 (or over different/subsequent processing loops). Further, the frequencies may be used to determine the amplitude values in the first sub-unit, in addition to the measured amplitude values, and the second sub-unit may then compare the measured amplitude with the determined (by the first sub-unit) amplitude to check whether they differ from each (and if, whether the difference is within a preset limit/range/margin). The comparison of the measured and the determined amplitudes may be performed for values of the same time, e.g. time t (or the same processing loop). Alternatively, the comparison of the measured and the determined amplitudes may be performed for values of different times, e.g. time t and t-1 (or different processing loops). The signal for recording is, in this option, triggered/generated if the frequencies are constant over time and if the amplitudes are within the predefined range.

Specifically preferred would be if the input data includes measurement data of the rotational frequency of a rotational machine and measurement data of the amplitude of the rotational frequency, and the first sub-unit configured to determine a value of the amplitude based on the rotational frequency included in the input data, and the second sub-unit configured to compare the rotational frequency measured at different times with each other, and, if the frequency is found to be constant, to compare the amplitude included in the input data with the amplitude determined by the first sub-unit, and, if the compared amplitudes are within a predefined range, to to generate the recording signal.

A further preferred option included in the alternatives above is that one parameter is measured, e.g. frequency of a rotational machine, and another parameter, e.g., the amplitude is determined by the first sub-unit. In this option, the above described second sub-unit may include the configuration that the measured values of the frequencies are compared with each other over different times/processing loops, and that the determined amplitudes are compared to each other over different times/processing loops. If both, the frequencies and the amplitudes, would be found to be constant, the recording signal would be triggered.

A further preferred option included in the alternatives above is that one parameter is measured, e.g. frequency of a rotational machine, and another parameter, e.g., the amplitude is determined by the first sub-unit. Then, the above described second sub-unit may include the configuration that only the determined amplitudes are compared to each other over different times/processing loops. And if the amplitudes would be found to be constant, the recording signal would be triggered.

Summarizing, the two sub-units may be flexibly used to either compare only values which were determined by the first sub-unit based on measured input data with each other over different times; e.g. amplitude values are determined based on measurement data of frequency and if the amplitude values are constant over time, the recording signal is generated. Alternatively, as described above, a mixed mode may be applied in which measurement values are compared with each other over time and determined values may be compared with measurement values to find out whether the measurement values compared with each other stay constant over time and whether the determined values do not deviate too much from the measurement values. Further, another mixed mode is enabled: For a part of the predefined parameters the measurement values are compared with each other over time, while for the other part of the predefined parameters only the determined values are compared to each other over time. The recording signal could then be issued if both comparisons return a constant behavior over time. Further, in another alternative, only measurement data values may be compared to determined values.

The technical improvement and benefit which comes with the above described aspect of the herein described data recording triggering device includes that the condition of a monitored system or a part/member/component/unit of said system can be determined without complex analytics where operational characteristics of said system or part thereof are constant and the relevant (constant) data is precisely recorded without recording (too) large amounts of data. In other words, the proposed device determines whether to begin data collection of signals of interest for system/part condition by using several characteristic inputs/ parameters (for example vehicle speed, location, acceleration) of the system's current operation. The system constantly monitors operational inputs but does not sample or record data until these inputs correspond to pre-defined parameters signifying constant operation, i.e. steady state; this allows for burst recording of only relevant useful data for effective condition evaluation of the system, such as rail vehicles.

In even other words, the presently described data recording triggering device inherits the technical benefit, compared to known options, that the data recording triggering is not dependent on the predetermination of discreet operational parameters and especially fixed thresholds thereof. The presently described data recording triggering neatly finds out when there is a constant "phase" of values of parameters, ie. stead state, and then starts collection of data - or ends it, if the constant "phase" has ended. Storage space for measured sensor data/measurement data can be kept smaller than in previously known solutions and data transmission rates, e.g. for wireless transmission of measurement data to analysis systems, can be kept at low levels, too. The determination of constant values is, with regard to computer processing resources, relatively noncomplex.

Further, the first sub-unit may be configured to receives (newly determined) measurement data as input data repeatedly, whereby repeatedly may include the meaning "in fixed or varying time intervals" or the like and "newly determined" may be optionally used for differentiating said measurement data with measurement data which was received as input data in a previous time/input loop or the like.

The first sub-unit may be configured to determine, in a looped processing, the one or more values of the predetermined parameters for each newly received value of input data. Looped processing is a preferred way of processing which shall especially mean that the determination is carried out and then started again when new data/values are input or started again in predefined cycles. The output value, as described above, is related to the input value/data and the representation of the system so that, based thereon, the output value should be the same or comparable to an output of the "real" physical system. E.g., if an electric circuit is reproduced/represented, the output value, e.g. including electric voltage, electric current or the like, shall be comparable to or the same as the output of the real/physical electric circuit. More specifically, the output value of the first sub-unit shall be the same or comparable to the real system for the same input parameters. In the simple example above, if the input value to the electric circuit is an electric current and if the expected/monitored/data of interest for the output value is an electric voltage at certain point(s) of the electric circuit, the output value(s) of the first sub-unit are identical or comparable to the values which would be achieved for the electric voltage at said certain point(s) in the real system/electric circuit.

Further, the second sub-unit may be a comparison unit which may be configured to compare at least the one or more values of a directly previous processing loop/cycle with the one or more values of the actual determination processing loop/cycle. In other words, for example, the values of the processing loop n may be compared with the values of the processing loop n-1 which are temporarily saved. Of course, the values of loop n may also be compared to further values, such as n-2, n-3 and/or so on.

A noncomplex structure of a model unit enabled to output the desired result by a rather simple comparison analysis dealing with a limited number of data values is hence provided.

Further, especially the first sub-unit may comprise a machine learning trained non-physical representation of the system or an artificial intelligence module which is configured to receive/expect at least one value of measurement data as input data and which returns at least one value of the predetermined parameter as output value to the second sub-unit. Machine learning trained shall entail especially that the non-physical representation of the system may be a software unit which was trained using a machine learning algorithm so that the "trained" system, which is then used in the first sub-unit, is fit to reproduce the output values comparable or the same like the real physical system.

Also preferably, the entire model unit may be an artificial intelligence software module which was trained to determine, for a given system, output values and as to whether they behave constant or not.

The use of machine learning and/or artificial intelligence reduces the complexity of the determination of constant output values even further.

Further, the second sub-unit may be configured to find/determine/confirm/output the compared values to be constant if the compared values are equal to each other or if the compared values are within a certain value range. If the model unit includes "intelligent" software modules, such as discussed above, the value range for which a sufficiently constant behavior is determined, may not necessarily be predetermined but detected/decided by said artificial intelligence or the like.

Also, the second sub-unit may be configured to compare values for a predetermined number of determinations in a row or for a predetermined time. Determinations in a row shall entail, as explained above, that results/output data values of past processing loops/cycles are compared with each other. For example, if the actual loop is n then the output values of the loop n may be compared with these of the loops n-1 or older ones, such as n-1 and n-2, n-1 and n-2 and/or n-3, and the like. Instead of using loop numbers, the time of measuring the signal/data or determining the output value can be used and then values of certain time periods may be compared with each other.

The precision of the behavior of the data recording triggering device can be finely adjusted by setting the error or variance margin/tolerance in dependence of the desired precision.

Further, the (monitored) system may be at least a part of a rotational machine, it may be an entire rotational machine or the monitored system may include a rotational machine, very preferably an electrical rotational machine. The rotational machine may include motors, bearings, gearboxes, and the like.

Further, the input data may include the rotational frequency of a rotational machine and the predetermined parameter of the rotational machine may include the amplitude of the rotational frequency, which may be determined in the first sub-unit by way of a Fourier transformation, preferably a fast Fourier transformation.

Using the amplitudes of the rotational frequencies as output data/values a constant condition can quickly and reliably be determined without large computational efforts or analysis complexity.

Further, the data recording signal for stopping the data collection may be generated in case the data collection is active and the predetermined parameter is found to be not constant anymore. This provides a noncomplex, reliable measure for a stopping of the data recording which can be determined by the same means as the starting condition of the data recording.

Further, the monitored system may be a part of a vehicle which has an (preferably electric) engine and additional input data may be the loading state of the vehicle. The vehicle may be a train, a car, a truck, a ship, an escalator, an elevator, and with the term "vehicle" also subparts shall be covered, such as doors of the before mentioned vehicles or at least the rotational machines of automatic doors, etc. Preferably, the model unit or the like is configured to assume that the loading state of the vehicle is constant during a movement of the vehicle, i.e. between a start of a driving and the end that may be detected by a vehicle speed or the like.

In a further aspect there is provided a method for triggering recording of data measured by a sensor installed in a monitored system. The method may include the steps of receiving input data from the one or more sensors; processing the input data; outputting a data collection signal by which recording of the sensor data is either started or terminated. The data processing may be carried out including a determination of one or more values of one or more predetermined parameters, a comparison of said values with previously determined values of the predetermined parameters, and generation of the data recording signal for starting data recording if the comparison of said values with the previously determined values indicates that the values of the predetermined parameters are constant. Further, the method may include the above described further options/alternatives/configurations for comparing different determined and/or measured values of the predefined parameters.

Additional steps according to the configuration of the data recording triggering device may be provided for the method, too.

In further exemplary aspects, which may be combined with any one or more of the above aspects, there may be provided a computer program product comprising computer-readable instructions that, when executed in a computer system (such as on one or more client computers and/or on one or more servers), cause the computer system to execute one or more steps of the above or below-described methods.

While certain exemplary aspects have been described above, it is to be understood that such aspects are merely illustrative of and may not be restrictive, and that the exemplary aspects are not limited to the specific constructions and arrangements shown and described above, since various other changes, combinations, omissions, modifications and substitutions, in addition to those set forth in the above paragraphs, are possible.

Those skilled in the art will appreciate that various adaptations, modifications, and/or combination of the just described aspects can be configured. Therefore, it is to be understood that, further aspects may be practiced other than as specifically described herein. For example, unless expressly stated otherwise, the steps of processes described herein may be performed in orders different from those described herein and one or more steps may be combined, split, or performed simultaneously.

Those skilled in the art will also appreciate, in view of this disclosure, that different aspects described herein may be combined to form other aspects of the present disclosure.

### Brief Description of Drawings

**Fig. 1** schematically shows an exemplary view of a data collection triggering device.
**Fig. 2** schematically shows an exemplary drawing of a vehicle network for controlling and monitoring.
**Fig. 3** schematically shows an exemplary control unit.
**Fig. 4** schematically shows an exemplary drawing of a part of the vehicle's system including a data collection triggering device.
**Fig. 5** schematically shows an exemplary flowchart of a data collection triggering process.
**Fig. 6** schematically shows an exemplary flowchart of an alternative data collection triggering process.
**Fig. 7** schematically shows an exemplary diagram according to a data collection triggering process.

### Detailed Description of Exemplary Embodiments

In the following, preferred aspects and embodiments of the present disclosure will be described in more detail with reference to the accompanying figures. Same or similar features in different drawings and embodiments are referred to by similar reference numerals. It is to be understood that the detailed description below relating to various preferred aspects and preferred embodiments are not to be meant as limiting the scope of the present disclosure.

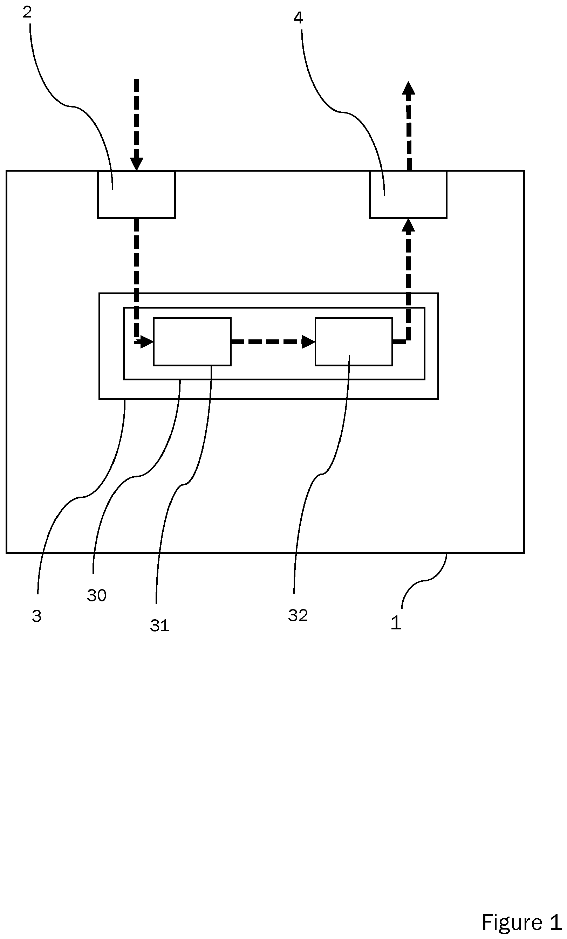

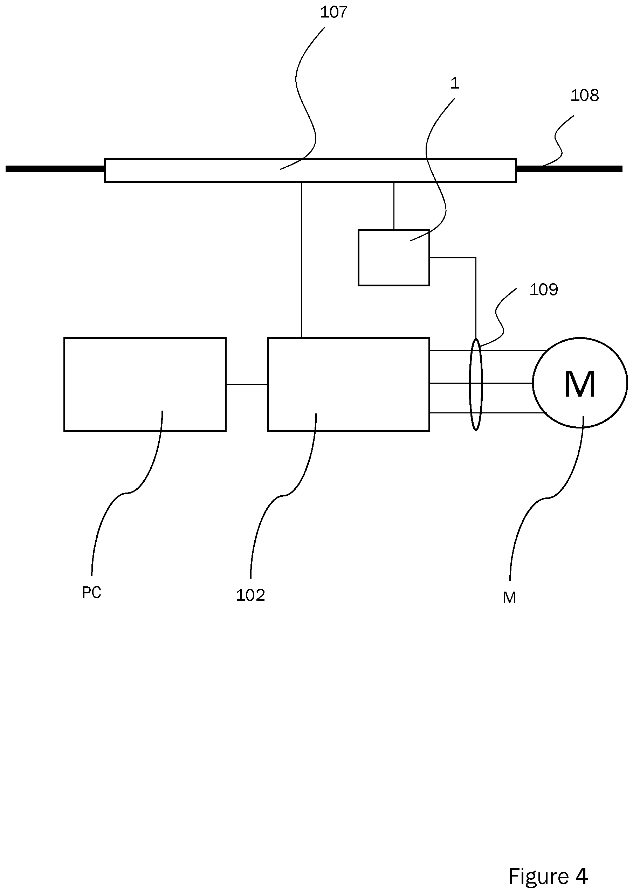

Figure 1 shows a schematic drawing of an exemplary data collection/recording triggering device 1 as described herein. The input unit 2 may receive data from a sensor (not shown in Figure 1; see reference sign 109 in Figure 4) and pass said data to a data processing unit 3 and/or a model unit 30. The model unit 30 may include further sub-units, here exemplarily shown a first and a second sub-unit 31, 32. The first sub-unit 31 may be used for processing the sensor data received by the input unit 2 and to generate/determine an output value which represents a value which would be output by a real physical system if the same input data/values were input thereto. Instead of single values, a plurality of values may be inputted and/or outputted. In other words, the first sub-unit 31 may include a non-physical representation of a real system or a part of a real system so that it may determine, like a simulator or the like, the output of a real system when a certain input is provided. The non-physical representation is preferably a software-based model.

The data generated by the first sub-unit 31, especially the output value(s) of parameter(s) of the non-physical representation of the system, is passed/sent to the second sub-unit 32 of the model unit 30. The parameters of the system for which values are determined by the first sub-unit 31 may be predefined parameters depending on the represented system which will be described by way of example further below.

The second sub-unit 32 preferably includes an ability/configuration to detect a time period of constant/steady-state values of data determined by the first sub-unit 31 and/or measurement values provided by the input unit 2. If it is detected that the values are constant or that they vary within limited or small value ranges (e.g. less then 1%, 2% or 5% of variation or the like) then the second sub-unit 32 is further configured to output, to the output unit 4, a data recording triggering signal which may start the collection/recording of measurement data from the sensor(s) of the system. The output signal may be output by the output unit 4 of the data collection triggering device 1 and it may be sent to a controller 101 of the system, an external controller or the like. Otherwise, if the second sub-unit 32 determines that the values are not constant anymore, after having been constant, a data recordingtriggering signal for stopping the data collection is created by the second sub-unit 32 and sent to the output unit 4 which outputs this signal. Generally, Figure 1 shows signal transmission paths between the above explained units by way of broken bold arrows. Further signal transmission paths may be provided which are not shown, e.g., a direct signal transmission path may be provided between the input unit 2 and the second sub-unit 32 if the second sub-unit 32 compares measurement values received by the input unit 2, and/or a signal transmission path may be provided between a storage space (not shown in Fig. 1) and the model unit 30, the first sub-unit 31 and/or the second sub-unit 32.

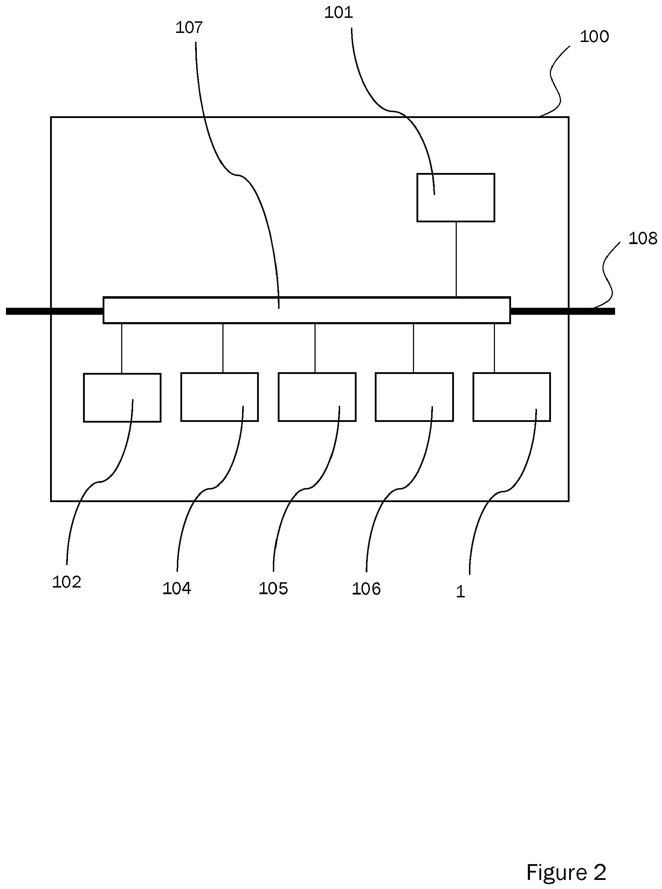

FIG. 2 shows a schematic of an exemplary monitored system, which may be, e.g., a railway-bounded vehicle with an onboard network for controlling and monitoring. The part of the monitored system, e.g. a car of a train 100, has a control unit 101, a transmission line 108 and a switching hub 107. The transmission line 108 may be connected with other transmission lines deployed in another car (not shown). Preferably, the control unit 101 is set on both of head and end car 100 of the train unit for the sake of redundancy. The middle cars 100 may not implement a control unit 101 in this example.

The switching hub 107 is configured to connect the transmission line 108 and different kinds of controlled equipment or monitored equipment of the car 100, including sub-units such as one or more power converters 102, one or more braking units 104, air conditioner(s) 105 and/or door(s) 106. The units/devices can be configured to receive command signals from the control unit 101 and send status information to the control unit 101 through the switching hub 107 and transmission lines 108. Other wiring options may be provided, too: For example, instead of a switching hub or the like, other wiring architectures may be provided for connecting the sub-units of the train 100 with the control device 101 or among each other.

Further, a monitoring unit being or including the data collection/recording triggering device 1 may also be connected with the switching hub 107 and configured to be able to communicate with control unit 101, e.g. via the input and output units 2 and 4 of the device 1.

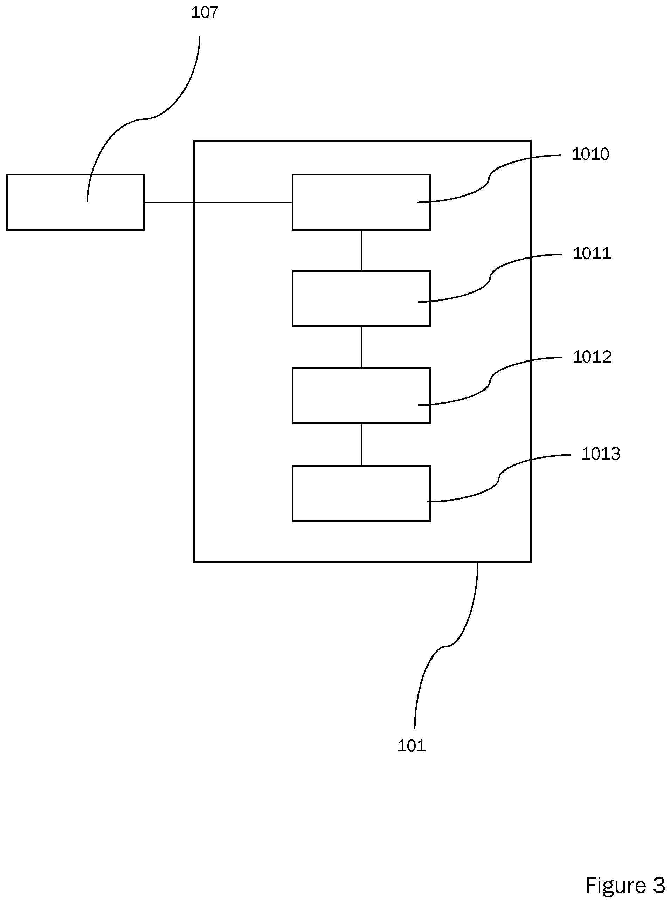

FIG.3 shows a schematic drawing of an exemplary control unit 101. The control unit 101 includes sub-units, such as the exemplary four sub-units shown in the Figure. More or less sub-units may be provided and the kind of sub-units may be varied, too. The sub-units shown in Figure 3 include a network interface 1010, a calculation unit 1011, a main memory unit 1012 and a data storage resource 1013. The network interface 1010 is configured to act as gateway handling data transmission and it is shown to be connected to the switching hub 107 if the example application scenario of Figure 2 is thought to be continued in Figure 3. The calculation unit 1011 can be a computing unit, such as a Central Processing Unit, generating commands for devices and processing data provided from devices/units/sub-units. The main memory 1012 may be used for deploying or for temporal storage of programmable function(s) and/or data processing. The data storage unit 1013 is for instance a solid-state drive or hard-disk drive suitable for storing data permanently. A learning model or representation included in the first sub-unit 31 which was described above and will be further described below is preferably stored in the data storage unit 1013 so that, once the control unit 101 turned on, it can be read out and deployed in the main memory 1012.

FIG. 4 shows a schematic drawing of an example of a preferred application scenario of the herein described data recording triggering device 1. The device 1 is provided together with a sensor 109 for monitoring an electrical current provided for a motor M. The sensing system for motor current may mainly include the data recording triggering device 1 and a sensor part/device 109. The sensor 109 is connected to the electrical power supply line between the motor and the power converter 102. The power supply lines for three electrical phases are shown by connecting lines between the power converter 102 and the motor M. Preferably, sensor 109 is equipped to be connected to each supply line respectively corresponding to three phase alternate current, so that the system is capable to monitor the electrical current flowing in each wire independently. The power converter 102 is further shown to be connected to a power source PC and the power converter is shown to be connected to the hub 107. The sensor 109 is shown to be connected to the device 1, ie its input unit 2 (see Figure 1). The output unit 4 (see Figure 1) is connected to the hub 107 which connects to the controller 101.

In this specific exemplary aspect of the disclosure, the data recording triggering device 1 is configured to monitor the amplitude of an electrical current flowing in the wire and to transmit data to the control unit 101. The data sampling could be conducted, for instance, at 50 kHz, which may however vary depending on the specifications of the sensor 109 and/or the signal processing capability of the data recording triggering device 1. In other words, it is a preferred application scenario that the sensor/s 109 detect the rotational frequency of the motor M and that the device 1 determines the amplitudes thereof and outputs the data recording triggering signal to the controller 101 if the amplitude values are found to be constant. These values can then be recorded in the vehicle/system or transmitted wirelessly to a storage space outside the system/vehicle for data analysis and CBM.

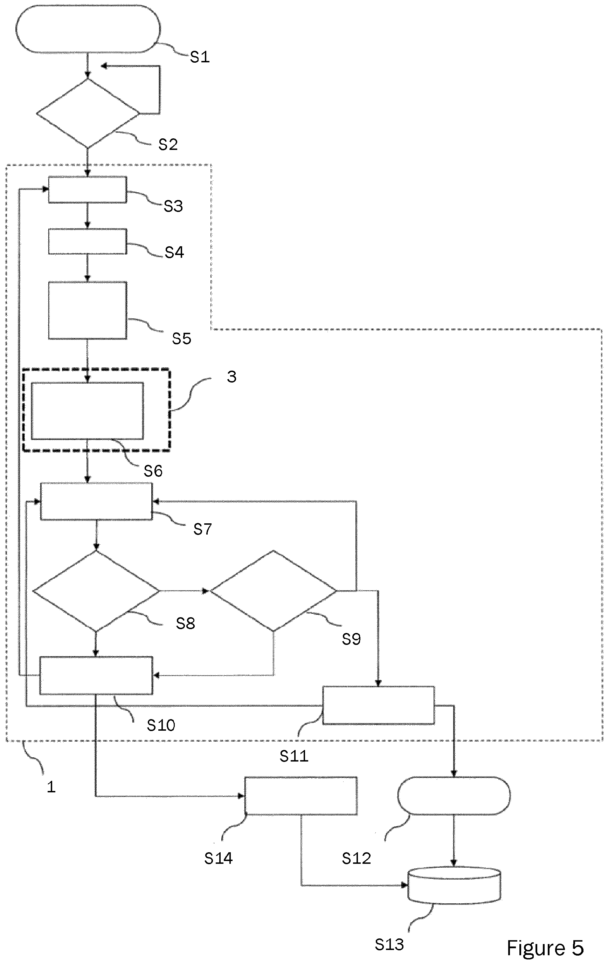

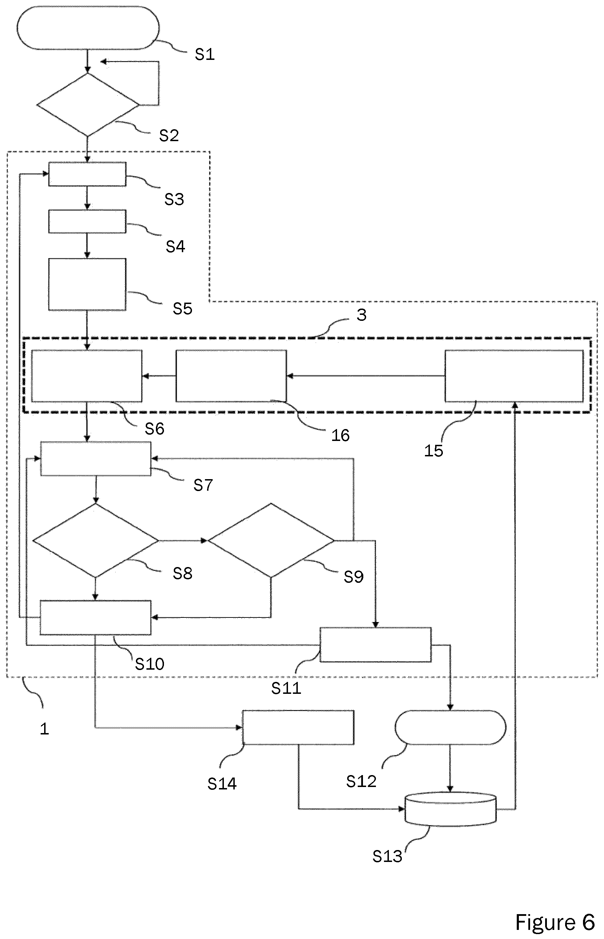

Based on the exemplary implementations/use cases/application scenarios discussed above, which can be expanded to other systems, such as other vehicles or the like, and other components than motors, such as gearboxes, or the like, a preferred procedural process will be discussed and explained in the following and by referring to Figures 5 and 6.

Figure 5 gives an overview of an exemplary operation of the herein described data recording triggering device 1. Step/Point 1 (S1) already shows a technical benefit of the herein described device 1 over the prior art. In this example a model/a non-physical representation of a system is trained using machine learning and provided to the herein described data recording triggering device, especially said model is provided within the model unit. For example, lab based experiments showed that a Support Vector Regression (SVR) algorithm is apt for building said model of a system. In these experiments, test data for a whole duty cycle, a range of fundamental rotational frequencies, and discreet loading conditions were used as input data and current amplitudes of the fundamental frequency across these duty cycles were recorded. This provided training data for the SVR algorithm to output a desired current amplitude for given frequency and preferably also for a given load condition of a vehicle. As the current amplitude can vary for a given frequency as a result of changes in operational condition, e.g., increasing or decreasing gradient, steady state detection, and the like therefore shall rely on detection of continuous frequency and amplitude. By using a machine learning algorithm, it is possible to determine the steady state condition/constant conditions in continuous operational conditions. Other algorithms than SVR are suitable for application to step/point 1, too. The detection of continuous operational conditions beneficially allows for noncomplex analysis after the data was recorded.

More generally speaking, the model unit 30 of the data recording triggering device 1 may include the first sub-unit 31 in which the trained model/computer program may be preferably stored which is trained to await an input, such as values for specific parameters, and to output values of specific parameters. In the example above, at least values of fundamental rotational frequencies of a rotational machine may be input data and the output may include values of the related current amplitudes. Other values/input data or parameters may be used as well depending on the physical model being represented in the first sub-unit and/or the field of application. With regard to rotational machines, such as electric motors, bearings, gearboxes, the use of the rotational frequencies, especially fundamental rotational frequencies, as well as the current amplitude has achieved very reliable and well-analyzable results.

With regard to the model implemented in the first sub-unit 31, the output values of the first sub-unit 31 may also be determined via simulation and a known mathematical model of the electrical system instead of a trained and tuned algorithm. However, using data from a test environment and a tuned/trained algorithm may provide a greater range of acceptable amplitudes that will be experienced in a real operational environment/the real system. Therefore, it is preferred to employ an artificial intelligence and/or trained algorithm.

Summarizing, in other words, the model unit 30, in particular a first sub-unit 31 thereof, may include a non-physical representation of the real system which may include a tuned software module/algorithm which was learned, preferably by means of machine learning, to output data or values which are expectable from the reals system as well and/or the non-physical representation may include a mathematical model and/or simulation software to output these values.

After step 1 above, which is rather a non-operational step of (preferably: once) providing the data collection triggering device 1 with a model unit 30, steps 2 onwards of Figure 5 describe the device in operation, e.g., in a vehicle or connected to a machine, preferably a rotating machinery/rotational machine. As condition based maintenance data testing is not required constantly a scheduler unit (step 2; not otherwise shown in the Figures) may be used to prompt the trigger layer/data collection triggering device 1 into operation. The optional scheduler unit is not explicitly shown and can be a component of one of the herein described devices and units.

Steps 3 through 7 show the measurement of parameters by the sensor(s) 109 of the monitored system. Here, assuming that an electrical rotating machine of a vehicle is monitored as one possible application example, a machine frequency is measured by a sensor (step 4) when in step 3 it was found that the scheduler unit decided that testing is desired/needed. The scheduler unit may decide this based on the input of an operator or based on set conditions, such as that data recording may only be done if the vehicle is moving or the like. Then, optionally, a loading condition of the vehicle is determined, e.g. either by information from the driver or by other sensors (step 5) and a predicted value for the current amplitude is determined by the model unit 30 based on the measured sensor value and, if available, by the load condition value (step 6); more specifically the determination of step 6 is carried out by the model unit 30 or its first sub-unit 31. The step 6 therefore makes use of the machine learning layer/non-physical representation of the real system of the data recording triggering device 1.

Then, Figure 5, steps 8 through 11 show a conditional loop where parameters/values for frequency and amplitude at different time steps are compared, load condition may (only) be used to determine the correct amplitude, and it is not required for steady state determination as it is presumed that loading condition (e.g. weight of the vehicle) will not change during movement.

More specifically, after the output data/values of the first sub-unit 31 are determined (see step 6), the steady-state determination, which may also be called constant-state determination, is initiated by step 7. Said constant-state determination may be performed in a sub-loop of the larger loop starting at step 3 as shown in the Figure 5.

After initializing the steady-state determination, step 8 is used to compare the (preferably measured) motor frequencies (in the example of using a motor and the frequencies as input data) at least from a time t and a previous time t-1. The times t and t-1 may indicate the time of measurement or the measurement values being numbered in accordance with their time of measurement. Each time step "t" may represent a predefined time period, such as 1s, 10s, 1 minute, etc. If it was determined in step 8 that the rotational frequencies are constant (i.e., stead-state), step 9 is carried out during which the second sub-unit 32 compares the output values of the first sub-unit 31, e.g. current amplitudes, for two different times, such as t and t-1. If step 9 finds that the current amplitudes are constant as well, the procedure continues with step 11 by which data recording/collection is started, i.e. a signal for starting the recoding is created by the second sub-unit 32 and provided to the output unit 4 which sends said signal to a respective unit, such as a controller 101, which can command the storage units/memories 1012/1023 to record the measurement data of the sensors 109 in a non-temporary memory/storage space. The data to be recorded is then preferably sent, step 12, to the storage space (see step 13) which can also be located remote to the vehicle, such as a database, a cloud space. Analysis of the recorded data is then possible in (nearly) real-time or any time after the data was measured/recorded.

Alternatively in step S9, it is possible that the amplitudes of one time step, e.g. time t, are compared to each other; specifically, if the amplitude is measured and included in the input data as well, the measured amplitude value measured at time step t may be compared to the amplitude determined by the first sub-unit 31 at/for time step t. The first sub-unit 31 may use the frequency measured at time t for determining the amplitude value (in this case the amplitude would be the "predefined parameter" to be determined by the first sub-unit 31). Then, as an alternative to the above, the recoding signal may be output if step S9 returns that the compared amplitudes are identical or within a predefined range. The predefined range may define a tolerable error margin, such as below 1%, below 5% or below 10%, or the like.

In a further alternative to step S9, the amplitudes of different times steps may be compared, e.g. the amplitude value determined for time t by the first sub-unit 31 may be compared to the measured amplitude value included in the input data measured for time t-1. The first sub-unit 31 may use the frequency measured at time t for determining the amplitude value (in this case the amplitude would be the "predefined parameter" to be determined by the first sub-unit 31). Then, the recoding signal may be output if step S9 returns that the compared amplitudes are identical or within a predefined range. The predefined range may define a tolerable error margin, such as below 1%, below 5% or below 10%, or the like.

Otherwise, if one of the steps 8 or 9 performed by the second sub-unit 32 indicate that the data is not constant (and/or not within the error margin), step 10 is activated which means that the second sub-unit 32 sends a stop signal of data recording to the controller 101 and/or the data recording device, such as the storage space, and records the time of end of measurement (step 14) if the measurement recording was active. As shown by the Figure 5, the greater processing loops may connect steps 10/11 with step 3, for example. Furthermore, the stopping of data recording may also be initiated, alternatively, if only one of the steps 8 or 9, only if both steps 8 or 9, of only if step 9 shows non-constant conditions.

With regard to the comparison, in the example of monitoring a rotating machine, frequency and/or amplitude at the current sample may be compared to a previous sample to determine an error and therefore whether operation is in a steady state, i.e. constant. A degree of variation to account for sensor precision and noise can be allowed using a distribution of parameters, where successive current values within a range of ± a set standard deviation or acceptable error are sufficient to determine steady state. This may be dependent on the level of accuracy desired from the measurement. If a steady state/constant value is determined to be true, data is sampled/recorded and stored in a suitable storage medium, local file, local database or cloud based database. When a steady state condition is determined to be no longer in effect data sampling will end and step 14 records that a test has been made. The comparison may be configured to the specific application scenario with regard to which parameters are compared to each other and in regard of whether only determined/predicted (by the first sub-unit 31) values of different times or processing loops are compared with each other, whether only measured values of different times or processing loops are compared with each other, or whether measured and determined/predicted (by the first sub-unit 31) values of same times/loops or different times/loops are compared to each other. This flexibility allows to adapt the herein described apparatus/method/computer program product for many different use scenarios without significant complexity.

Furthermore, Figure 6 shows a modified example for the procedural flow in which the first sub-unit 31 and its non-physical representation of the monitored system is updated by data which is collected during the operation of the data recording triggering device 1. In other words, the machine learning model included in the first sub-unit 31 may be trained by data recorded after the data recording was started, i.e. after step 11, and the thereby the model may be updated. The updated model may regularly deployed/implemented into the first sub-unit 31 for further improving accuracy and the like thereof.

In other words, the device 1 is identical to Example 1 of Figure 5 with the exceptions of steps 15 and 16. These additional steps show an additional possible feature that provides continual improvement. Data from the storage device/memory may be returned to the machine learning layer/first sub-unit 31 at an edge device or in a cloud application. The algorithm used to determine amplitude from frequency and loading condition can be retrained using the historic and new data. New data is received when a test has been determined to have been completed, after the algorithm has been retrained it can be re-deployed at the edge device where measurement takes place and will provide a more accurate prediction of current amplitude. This can be automated or can be applied using a domain expert. Therefore, the data processing unit 3 or the model unit 30 or only the first sub-unit 31 may include the steps or the steps may be carried out therein being shown by S15 and S16 which include updating the previous model and deploying the updated model to use in the first sub-unit 31 (S6 in Figure 6).

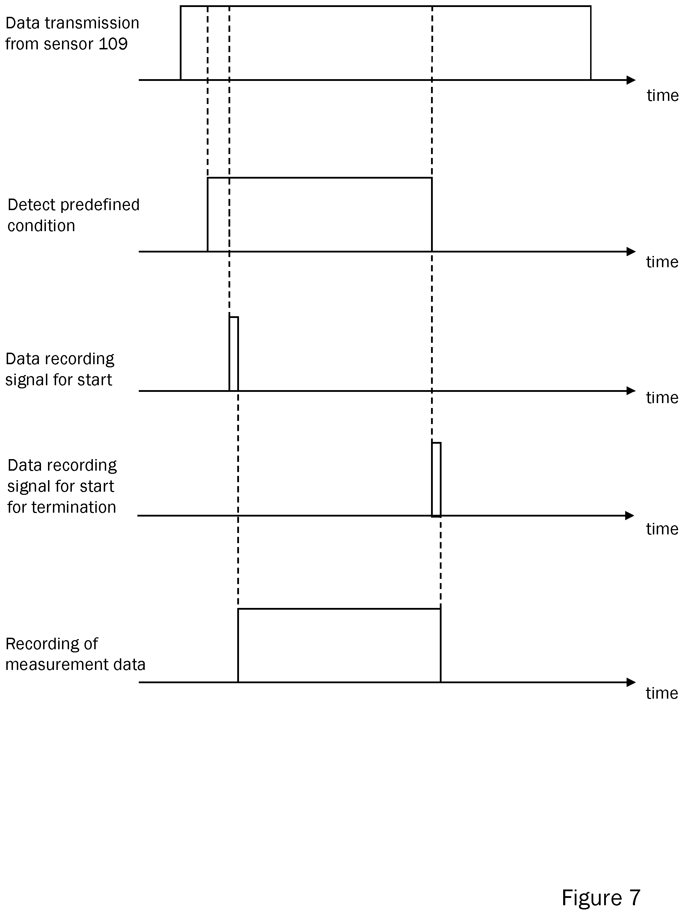

Moreover, FIG. 7 shows a schematic drawing for a data transmission scheme within the control unit 101 after receiving data from the transmission line. After receiving data from device 1 through transmission line 107, the first sub-unit 31 searches the data for a predefined condition, e.g. constant values, to generate the triggering signal for recording the transmitted data in the data storage unit 1013 (steps 8-9 and 11-12 in Figures 5 and 6). When the predefined condition is met, a trigger signal for permission of recording, i.e. the data recording trigger signal, is generated and data storage unit 1013 records the data or the data is wirelessly sent for storing said data. The data is further monitored so that a trigger/signal can be generated if the predefined condition is not met anymore, e.g. the values are not constant anymore. Recording of data is stopped after the non-constant condition was detected (step 14 in Figures 5 and 6). One can see that the amount of data being actually recorded and analyzed is minimized by the neat triggering device 1 explained in this disclosure. Further, data recorded during constant operational conditions is less complex to analyze.

The disclosure can be applied to a range field of technologies, including railway systems, factories, automotive systems, power generation systems, and the like. It can be summarized that an intelligent triggering system of data recording for a condition based maintenance system is provided, in continuous operational conditions, preferably with automatic updating of the machine learning algorithm.

As will be appreciated by one of skill in the art, the present disclosure, as described hereinabove and the accompanying figures, may be embodied as a method, an apparatus (including a device, machine, system, computer program product, and/or any other apparatus), or a combination of the foregoing.

Accordingly, embodiments of the present disclosure may take the form of an entirely hardware embodiment, an entirely software embodiment (including firmware, resident software, micro-code, etc.), or an embodiment combining software and hardware aspects that may generally be referred to herein as a "system". Furthermore, embodiments of the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally may indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

Aspects are described hereinabove with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

These computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment.

It should be noted that terms such as "server" and "processor" may be used herein to describe devices that may be used in certain embodiments and should not be construed to limit to any particular device type unless the context otherwise requires. Thus, a device may include, without limitation, a bridge, router, bridge-router (brouter), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclsoure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternative embodiments may, as appropriate, employ variations of such communication protocols (e.g., modifications or extensions of the protocol that may be made from time-to-time) or other protocols either known or developed in the future.

It should also be noted that logic flows may be described herein to demonstrate various aspects and should not be construed to limit the disclosure to any particular logic flow or logic implementation. The described logic may be partitioned into different logic blocks (e.g., programs, modules, functions, or subroutines) without changing the overall results.

Often times, logic elements may be added, modified, omitted, performed in a different order, or implemented using different logic constructs (e.g., logic gates, looping primitives, conditional logic, and other logic constructs) without changing the overall results.

The present disclosure may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of embodiments may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" may refer generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some aspects may be implemented as a combination of both software (e.g., a computer program product) and hardware. Still other embodiments of the may be implemented as entirely hardware, or entirely software.

While certain exemplary aspects have been described and shown in the accompanying drawings, it is to be understood that such aspects are illustrative, and that the embodiments are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described embodiments can be configured. Therefore, it is to be understood that, within the scope of the appended claims, the disclosure may be practiced other than as specifically described herein. For example, unless expressly stated otherwise, the steps of processes described herein may be performed in orders different from those described herein and one or more steps may be combined, split, or performed simultaneously.

Those skilled in the art will also appreciate, in view of this disclosure, that different embodiments or aspects described herein may be combined to form other embodiments.

## Claims

1. A data recording triggering device (1) for a system that has one or more sensors (109) comprising:
- a data input unit (2) configured to receive measurement data determined by the one or more sensors (109) as input data;
- a data processing unit (3) configured to process the input data received by the data input unit (2);
- a data output unit (4) configured to output a data recording signal by which recording of the measurement data is either started or terminated, wherein
the data processing unit (3) includes a model unit (30) with a first sub-unit (31) storing a non-physical representation of said system and configured to process the input data such as to determine one or more values of one or more predetermined parameters and to output said values to a second sub-unit (32) of the model unit (30),
the second sub-unit (32)
- configured to compare said values of one or more parameters with previously determined values of the predetermined parameters, to compare measurement data of one or more parameters with each other, and/or to compare said values of one or more parameters with measurement data of the predetermined parameters; and
- configured to generate the data recording signal for starting data recording if the comparison of said values with the previously determined values or the comparison of the measurement data with each other indicates that the values of the predetermined parameters or the measurement data are constant, and/or if the comparison of said values with the measurement data of the predetermined parameters indicates that a difference between the measurement data and the values output by the second sub-unit (32) is within a predefined range.

2. The data recording triggering device of claim 1, wherein the first sub-unit (31) is configured to receive newly determined measurement data as input data repeatedly and the first-sub unit (31) is configured to determine, in a looped processing, the one or more values of the predetermined parameters for each newly received value of input data, and
the second sub-unit (32) is a comparison unit configured to compare at least the one or more values of a directly previous processing loop with the one or more values of the actual determination processing loop, and to generate the recording signal for the starting data recording if the comparison indicates that the values of the previous processing loop and the actual determination loop are constant.

3. The data recording triggering device of at least one of claims 1 to 2, wherein the first-subunit (31) includes a machine learning trained non-physical representation of the system which is configured to receive at least one value of measurement data as input data and which returns at least one value of the predetermined parameter as output value to the second sub-unit (32).

4. The data recording triggering device of at least one of claims 1 to 3, wherein the second sub-unit (32) is configured to find the compared values to be constant if the compared values are equal to each other or if the compared values are within a predefined value range, and/or wherein
the second sub-unit (32) is configured to compare values for a predetermined number of determinations in a row or for a predetermined time period.

5. The data recording triggering device of at least one of claims 1 to 4, wherein the system includes a rotating machine.

6. The data recording triggering device of at least one of claims 1 to 5, wherein the system includes a rotating machine, and wherein
the input data includes the rotational frequency of the rotational machine and the predetermined parameter includes the amplitude of the rotational frequency.

7. The data recording triggering device of at least one of claims 1 to 5, wherein the system includes a rotating machine, the input data includes measurement data of the rotational frequency of the rotational machine and measurement data of the amplitude of the rotational frequency, and wherein
the first sub-unit (31) is configured to determine a value of the amplitude based on the rotational frequency included in the input data, and
the second sub-unit (32) is configured to compare the rotational frequency measured at different times with each other, and, if the frequency is found to be constant, to compare the amplitude included in the input data with the amplitude determined by the first sub-unit (31), and, if the compared amplitudes are within a predefined range, to generate the recording signal.

8. The data recording triggering device of claim 6 or 7, wherein the first sub-unit (31) determines the amplitude of the rotational frequency by a fast Fourier transformation.

9. The data recording triggering device of at least one of claims 1 to 8, wherein the data recording signal for stopping the data collection is generated in case the data recording is active and the predetermined parameter is found to be not constant anymore or when the difference between the measurement data input and the determined value is larger than the predefined range.

10. The data recording triggering device of at least one of claims 1 to 9, wherein the system is a part of a vehicle (100) which has an electric engine and additional input data includes the loading state of the vehicle (100).

11. A method for triggering recording of data measured by a sensor installed in a monitored system including the steps of
- receiving input data from the one or more sensors;
- processing the input data;
- outputting a data collection signal by which recording of the sensor data is either started or terminated, wherein
the data processing is carried out including a determination of one or more values of one or more predetermined parameters, a comparison of said values with previously determined values of the predetermined parameters, a comparison of measurement data of one or more parameters with each other, and/or a comparison of one or more measurement data values of the predetermined parameters with one or more determined values, and
generation of the data recording signal for starting data recording if the comparison of said values with the previously determined values or the comparison of the measurement data with each other indicates that the values of the predetermined parameters or the measurement data are constant, and/or if the difference between the measurement data values and the determined values is within a predefined range.

12. Computer program product storable in a memory comprising instructions which, when carried out by a computer, cause the computer to perform the method according to at least method claim 11.
